# EUROPÄISCHE PATENTSCHRIFT

(11) **EP 2 442 113 B1**
(45) Veröffentlichungstag und Bekanntmachung des Hinweises auf die Patenterteilung: **13.11.2013**
(21) Anmeldenummer: 11180389.6
(22) Anmeldetag: 07.09.2011
(51) Int. Cl.: G01P 3/49, G01P 3/488, G01P 1/02, F01D 17/06

(54) **Sensorvorrichtung zur Erfassung einer Rotationseigenschaft eines rotierenden Elements**
Sensor device for recording a rotation characteristic of a rotating element
Dispositif de détection pour la détection d'une caractéristique de rotation d'un élément rotatif

(30) Priorität: 03.03.2011 DE 102011005032; 13.10.2010 DE 102010042406
(43) Veröffentlichungstag der Anmeldung: 18.04.2012
(73) Patentinhaber: Robert Bosch GmbH, 70442 Stuttgart (DE)
(72) Erfinder: Kassner, Uwe, 71696 Moeglingen (DE)

(56) Entgegenhaltungen:
- WO-A1-2007/085535
- DE-A1- 19 623 236
- DE-A1-102006 021 430
- DE-A1-102007 005 769

## Beschreibung

### Stand der Technik

Aus dem Stand der Technik sind zahlreiche Sensoren bekannt, welche mindestens eine Rotationseigenschaft rotierender Elemente erfassen. Unter Rotationseigenschaften sind dabei allgemein Eigenschaften zu verstehen, welche die Rotation des rotierenden Elements zumindest teilweise beschreiben. Hierbei kann es sich beispielsweise um Winkelgeschwindigkeiten, Drehzahlen, Winkelbeschleunigungen, Drehwinkel, Winkelstellungen oder andere Eigenschaften handeln, welche eine kontinuierliche oder diskontinuierliche, gleichförmige oder ungleichförmige Rotation oder Drehung des rotierenden Elements charakterisieren können. Beispiele derartiger Sensoren sind in Robert Bosch GmbH: Sensoren im Kraftfahrzeug, Ausgabe 2007, Seiten 114-127 beschrieben. Ein besonderer Schwerpunkt der vorliegenden Erfindung, auf welche die Erfindung jedoch grundsätzlich nicht beschränkt ist, liegt in einer Drehzahlerfassung, insbesondere der Drehzahlerfassung von Aufladeeinrichtungen, insbesondere in Abgasturboladern. Diese Drehzahlerfassung kann insbesondere eingerichtet sein, um eine Drehzahl eines Laufrads des Abgasturboladers zu erfassen. Dieses Laufrad ist in der Regel mit einer Mehrzahl von Verdichterschaufeln ausgestattet.

Aus DE 196 23 236 A1 ist ein Verfahren zum Messen der Bewegung eines Teils in einem Innenraum eines Gehäuses bekannt. Hierbei wird ein im Wesentlichen senkrecht zu einer Bewegungsrichtung des Teils wirkendes Permanentmagnetfeld erzeugt, und beim Vorbeibewegen des Teils werden Induktionssignale erzeugt und gemessen. Beispielsweise kann das Magnetfeld mit einem Permanentmagneten erzeugt werden, und die Induktionssignale, die durch Wirbelströme in bewegten Verdichterschaufeln hervorgerufen werden können, können mit einer außerhalb des Verdichtergehäuses angeordneten Spule erfasst werden.

Auch aus DE 10 2007 005 769 A1 ist eine Drehzahlerfassungseinrichtung für eine Aufladeeinrichtung, insbesondere für ein Laufrad eines Abgasturboladers, bekannt. Dabei werden separat Permanentmagnete und eine Sensorschaltung verwendet, welche räumlich voneinander getrennt angeordnet werden. Es wird ein Gehäuse aus einem Kunststoffmaterial verwendet, in welches die Permanentmagnete als Einlegeteil eingebettet sind. Die Sensorschaltung wird an einer Außenseite der Wand des Gehäuses in einer Ausnehmung aufgenommen.

Aus der DE10 2006 021 430 A1 ist eine Vorrichtung zur Erfassung einer Drehzahl eines Verdichters eines Abgasturboladers bekannt, bei der ein aktives Sensorelement entweder das variierende Magnetfeld eines auf der Turboladerachse angeordneten Magneten erfasst. Oder bei dem das aktive Sensorelement in Höhe der Schaufeln des Kompressorrades angeordnet ist und die Drehzahl nach dem Wirbelstromverfahren erfasst.

Aus der WO 2007/085535 ist ein in einem Spritzgussverfahren hergestelltes Kompressorgehäuse bekannt, in das eine Sensorvorrichtung eingebettet werden kann, um die Drehzahl der rotierenden Teile eines Abgasturboladers kostengünstig, sicher und genau zu erfassen. Die Messung der Drehzahl erfolgt dabei an der Turbowelle des Abgasturboladers mittels Magnetfeldern. Diese werden durch auf der Turbowelle angeordnete Permanentmagnete generiert.

Bei den aus dem Stand der Technik bekannten Vorrichtungen wird somit typischerweise ein zylindrischer Sensor verwendet, welcher einen möglichst geringen Durchmesser aufweist und von außen in eine Bohrung des Gehäuses eingebracht wird. Vorteilhaft aus strömungstechnischer Sicht ist die Auslegung der Bohrung für den Sensor als Sackloch. Derartige, aus dem Stand der Technik bekannte Bohrungen zur Aufnahme zylindrischer, beispielsweise stiftförmiger, Sensoren bedingen jedoch in der Regel geringe Durchmesser des Sensors. Bei Sacklochbohrungen tritt zusätzlich, im Vergleich zu Durchgangsbohrungen, durch das zwischen dem Sensor und dem Verdichterrad angeordnete Gehäusematerial, in der Regel eine Signalabschwächung auf. Selbst wenn, wie aus DE 10 2007 005 769 A1 bekannt, das Verdichtergehäuse aus Kunststoff gefertigt wird, bedingen die geringen Querschnittsflächen des Sensors bei herkömmlichen Sensorelementen in der Regel eine vergleichsweise geringe Signalamplitude, die üblicherweise zum Zweck einer störsicheren Übertragung, beispielsweise zu einem Motorsteuergerät, eine Signalverstärkung erforderlich macht. Da die hohen Temperaturen in der Nähe des Verdichterrades in der Regel die Anwendung herkömmlicher Halbleiterbauelemente ausschließen, werden bei Vorrichtungen gemäß dem Stand der Technik in der Regel Signalverstärkungen in Steckerelemente integriert.

Wünschenswert wären dementsprechend Sensorvorrichtungen, welche vorzugsweise auch ohne Signalverstärkung eine hohe Signalamplitude realisieren und dennoch eine hohe Temperaturfestigkeit aufweisen.

### Offenbarung der Erfindung

Es wird eine Sensorvorrichtung zur Erfassung mindestens einer Rotationseigenschaft eines rotierenden Elements vorgeschlagen. Wie oben beschrieben, kann es sich bei der Rotationseigenschaft grundsätzlich um eine beliebige Eigenschaft handeln, welche eine Drehung und/oder Rotation des rotierenden Elements charakterisiert. Insbesondere kann die Rotationseigenschaft eine Drehzahl sein oder eine Drehzahl umfassen. Die Sensorvorrichtung kann insbesondere zur Erfassung einer Drehzahl eines Verdichters eines Abgasturboladers eingesetzt werden. Alternativ oder zusätzlich sind jedoch auch andere Einsatzgebiete möglich.

Die Sensorvorrichtung umfasst mindestens ein Gehäuse, wobei das rotierende Element zumindest teilweise von dem Gehäuse umschlossen ist. Das rotierende Element kann insbesondere um eine Achse drehbar gelagert sein. Beispielsweise kann das rotierende Element eine oder mehrere Verdichterschaufeln umfassen, welche um die Achse drehbar gelagert sind, wobei das Gehäuse die Verdichterschaufeln zumindest teilweise umfangsseitig umschließt.

Das Gehäuse weist mindestens ein Gehäusematerial auf. Die Sensorvorrichtung weist weiterhin mindestens einen Magnetfelderzeuger zur Erzeugung eines magnetischen Feldes am Ort des rotierenden Elements auf, beispielsweise zur Erzeugung eines magnetischen Feldes am Ort mindestens einer Verdichterschaufel, beispielsweise in mindestens einer Winkelstellung der Verdichterschaufel. Weiterhin weist die Sensorvorrichtung mindestens einen Magnetsensor zur Erfassung eines durch Wirbelströme des rotierenden Elements erzeugten Magnetfelds auf. Der Magnetsensor kann als separates Bauelement zu dem Magnetfelderzeuger ausgestaltet sein, kann jedoch grundsätzlich auch einstückig mit dem Magnetfelderzeuger ausgestaltet werden.

Der Magnetsensor ist zumindest teilweise, vorzugsweise vollständig, in dem Gehäusematerial eingebettet. Unter einem Einbetten ist dabei eine stoffschlüssige Einbindung des Magnetsensors in das Gehäusematerial zu verstehen. Vorzugsweise kann der Magnetsensor als Einlegeteil in dem Gehäusematerial eingebettet sein. Insbesondere kann das Gehäusematerial der Kontur des Magnetsensors vollständig folgen. Auf diese Weise lassen sich, im Unterschied zu dem oben beschriebenen Stand der Technik, in welchem der Magnetsensor entweder außerhalb des Gehäuses oder in einer von außen in das Gehäuse eingebrachten Ausnehmung eingebracht ist, die Nachteile üblicher Magnetsensoren mit geringer Querschnittsfläche vermeiden, da grundsätzlich die Querschnittsfläche des Magnetsensors nunmehr nicht mehr durch eine Ausnehmung, beispielsweise eine Sacklochbohrung, beschränkt ist. Hierdurch lassen sich die Signalamplituden erheblich erhöhen.

Das Gehäusematerial kann insbesondere mindestens ein Kunststoffmaterial umfassen. Beispielsweise können hierbei hochtemperaturfeste Kunststoffe verwendet werden, wie sie aus neueren Entwicklungen für Abgasturbolader bekannt sind und wie sie beispielsweise auch in DE 10 2007 005 769 A1 beschrieben sind. Der Magnetsensor kann insbesondere von dem Kunststoffmaterial umschlossen sein, vorzugsweise allseitig. Insbesondere kann dies durch ein Umspritzen und/oder Vergießen des Magnetsensors erfolgen.

Der Magnetsensor kann insbesondere mindestens eine Spule umfassen. Dies bietet den Vorteil, dass mittels Spulen große Sensorflächen realisierbar sind. Gleichzeitig lassen sich durch die Verwendung von Spulen Temperaturempfindlichkeiten, welche beispielsweise bei Halbleiter-Magnetsensoren oder magnetresistiven Sensoren auftreten, vermeiden.

Die Spule kann insbesondere eine Flachspule sein und kann vorzugsweise einen Spulenquerschnitt in einer Wicklungsfläche aufweisen, welche eben oder auch gekrümmt sein kann, welche eine Spulenhöhe der Spule, beispielsweise entlang einer Achse der Spule, überschreiten kann, vorzugsweise um mindestens einen Faktor 2, insbesondere um mindestens einen Faktor 4.

Die Sensorvorrichtung ist derart ausgestaltet, dass eine dem rotierenden Element zuweisende Oberfläche des Gehäuses einen einer Krümmung des rotierenden Elements angepassten gekrümmten Verlauf aufweist. Unter einem gekrümmten Verlauf ist dabei ein nicht-ebener Verlauf zu verstehen. Unter einem angepassten Verlauf ist ein Verlauf zu verstehen, bei welchem ein Abstand zwischen der Oberfläche und dem rotierenden Element in zumindest einer Richtung auf der Oberfläche über zumindest eine gewisse Strecke oder Fläche hinweg im Wesentlichen konstant ausgestaltet ist, beispielsweise indem dieser Abstand über eine Strecke von mindestens 1 cm, vorzugsweise mindestens 2 cm, hinweg um nicht mehr als 20 % variiert, vorzugsweise um nicht mehr als 10 %.

Die Sensorvorrichtung ist derart ausgestaltet, dass eine dem rotierenden Element zuweisende Sensoroberfläche des Magnetsensors einen gekrümmten Verlauf aufweist. Beispielsweise kann diese gekrümmte Sensoroberfläche eine Oberfläche einer gekrümmten Spule, insbesondere einer gekrümmten Flachspule sein, beispielsweise diejenige Fläche, welche durch die äußerste, dem rotierenden Element zuweisende Windung der Flachspule definiert wird. Der gekrümmte Verlauf der Sensoroberfläche ist dem optional gekrümmten Verlauf der Oberfläche des Gehäuses angepasst, insbesondere im Sinne der obigen Definition von angepasst. Der Magnetsensor kann insbesondere eine gekrümmte Flachspule umfassen, welche beispielsweise als Einlegeteil von dem Gehäuse umspritzt sein kann, wobei die Krümmung der Flachspule vorzugsweise einer Krümmung der dem rotierenden Element zuweisenden Oberfläche des Gehäuses angepasst ist.

Das rotierende Element kann insbesondere um eine Achse drehbar gelagert sein. Der Magnetsensor kann eine dem rotierenden Element zuweisende Sensoroberfläche aufweisen, welche vorzugsweise in einer tangentialen Richtung zur Achse eine geringere Ausdehnung aufweist als in einer axialen Richtung. Dies bedeutet vorzugsweise, dass eine Schnittlinie einer die Achse einschließenden Ebene mit der Sensoroberfläche länger ist als eine Schnittlinie einer senkrecht zur Achse angeordneten Ebene mit der Sensoroberfläche. Insbesondere kann die axiale Schnittlinie um mindestens einen Faktor 1,3, vorzugsweise um mindestens einen Faktor 1,5 oder sogar einen Faktor 1,7, vorzugsweise um mindestens einen Faktor 2 länger sein als die tangentiale Schnittlinie. Beispielsweise kann die Sensoroberfläche rechteckig ausgestaltet sein, wobei insbesondere in den Ecken auch leichte Abweichungen von einem rechteckigen Verlauf möglich sind, beispielsweise in Form von abgerundeten Kanten. In diesem Fall kann insbesondere eine längere Seite des Rechtecks in einer axialen Ebene angeordnet sein, und die kürzere Seite in einer Ebene senkrecht zur Achse. Die Rechteckfläche kann auch gebogen oder auf andere Weise gekrümmt ausgestaltet sein. Alternativ kann auch beispielsweise eine ovale Sensoroberfläche verwendet werden, vorzugsweise mit einer längeren Halbachse in einer axialen Ebene. Auch diese ovale Sensoroberfläche kann gebogen oder gekrümmt ausgestaltet sein.

Der Magnetfelderzeuger kann insbesondere mindestens einen, beispielsweise genau einen, zwei, drei oder mehr Permanentmagneten umfassen. Allgemein kann auch der mindestens eine Magnetfelderzeuger, insbesondere der mindestens eine Permanentmagnet, ganz oder teilweise in das Gehäusematerial eingebettet sein, beispielsweise durch Umspritzen und/oder Vergießen, vorzugsweise in einem Kunststoffmaterial.

Der Magnetfelderzeuger kann insbesondere zumindest teilweise von dem Magnetsensor umschlossen sein. Dies kann beispielsweise dadurch erfolgen, dass die Spule den Permanentmagneten vollständig oder teilweise umschließt. Auch der Permanentmagnet kann vorzugsweise eine Rechteckform und/oder ovale Form aufweisen, mit einer längeren Seite oder längeren Halbachse in einer Ebene, welche die Achse des rotierenden Elements einschließt.

Der Magnetsensor kann insbesondere mindestens eine Zuleitung aufweisen. Die Zuleitung kann insbesondere zumindest teilweise in dem Gehäusematerial eingebettet sein, beispielsweise wiederum durch Umspritzen und/oder Vergießen. Diese Zuleitung kann insbesondere mindestens ein Verbindungselement umfassen, insbesondere mindestens einen Steckverbinder, wobei auch der Steckverbinder vorzugsweise zumindest teilweise in dem Gehäusematerial eingebettet ist, beispielsweise indem dieser teilweise eingespritzt und/oder eingegossen in ein Kunststoffmaterial des Gehäuses ist, wobei vorzugsweise ein Teil des Steckverbinders von außen zugänglich bleibt.

Während bei aus dem Stand der Technik bekannten Konstruktionen von Sensorvorrichtungen üblicherweise genau ein Magnetsensor und genau ein Magnetfeldsensor vorgesehen sind, ist es im Rahmen der vorliegenden Erfindung besonders bevorzugt, wenn die Sensorvorrichtung mindestens zwei Magnetsensoren aufweist, vorzugsweise mindestens drei und besonders bevorzugt mindestens vier oder mehr Magnetsensoren, insbesondere Spulen. Weiterhin kann die Sensorvorrichtung auch mindestens zwei, vorzugsweise mindestens drei, besonders bevorzugt mindestens vier oder sogar mehr Magnetfelderzeuger, insbesondere Permanentmagneten aufweisen. Insbesondere kann die Anzahl der Magnetfelderzeuger gleich der Anzahl der Magnetsensoren sein.

Sind mehrere Magnetsensoren und mehrere Magnetfelderzeuger vorgesehen, so können die Magnetsensoren und die Magnetfelderzeuger insbesondere einander zugeordnet sein. Beispielsweise kann jedem Magnetsensor mindestens ein Magnetfelderzeuger zugeordnet sein, vorzugsweise genau ein Magnetfelderzeuger. Insbesondere können auf diese Weise Magnetsensor-Magnetfelderzeuger-Gruppen oder Magnetsensor-Magnetfelderzeuger-Paare gebildet sein. Diese Zuordnung kann beispielsweise räumlich erfolgen, insbesondere durch starke räumliche Nähe, beispielsweise indem der Abstand zwischen einem Magnetfelderzeuger und seinem zugeordneten Magnetsensor um mindestens einen Faktor zwei, insbesondere um mindestens einen Faktor drei und besonders bevorzugt um mindestens einen Faktor fünf kleiner ist als der Abstand zwischen dem Magnetfelderzeuger und einem anderen, dem Magnetfelderzeuger nicht zugeordneten Magnetsensor. Insbesondere kann der Magnetfelderzeuger ganz oder teilweise von dem Magnetsensor umschlossen sein, beispielsweise bei Ausgestaltung des Magnetsensors als Spule, beispielsweise indem der Magnetfelderzeuger, insbesondere der Permanentmagnet, durch eine Spulenöffnung der zugeordneten Spule ragt.

Wie oben ausgeführt, kann das rotierende Element insbesondere einen Verdichter eines Abgasturboladers umfassen. In diesem Fall ist es besonders bevorzugt, wenn eine Anzahl der Magnetsensoren einer Anzahl an Verdichterschaufeln des Abgasturboladers entspricht oder einem ganzzahligen Vielfachen oder einem ganzzahligen Teiler dieser Anzahl an Verdichterschaufeln. Allgemein kann die Sensorvorrichtung bevorzugt derart ausgestaltet sein, dass das rotierende Element eine n-zählige Rotationssymmetrie aufweist, wobei die Anzahl der Magnetsensoren n ist, ein ganzzahliges Vielfaches von n oder ein ganzzahliger Teiler von n.

Sind mehrere Magnetsensoren vorgesehen, so ist es besonders bevorzugt, wenn die Magnetsensoren äquidistant angeordnet sind. Insbesondere können die Magnetsensoren gleichmäßig über einen Umfang eines das rotierende Element umschließenden Körpers, insbesondere des Gehäuses, verteilt angeordnet sein, beispielsweise mit konstantem Winkelabstand jeweils zwischen benachbarten Magnetsensoren.

Die Magnetsensoren können insbesondere derart zu dem rotierenden Element angeordnet sein, dass diese phasengleiche Signale erfassen. Eine Abweichung von nicht mehr als 20°, vorzugsweise von nicht mehr als 10° und besonders bevorzugt von nicht mehr als 5°, vorzugsweise jedoch von nicht mehr als 2°, kann dabei im Rahmen der Phasengleichheit noch tolerierbar sein. Vorzugsweise ist die Abweichung in der Phasenlage jedoch Null. Auch diese Ausgestaltung der phasengleichen Signale kann beispielsweise wiederum dadurch erreicht werden, dass eine Symmetrie der Verteilung der Magnetsensoren auf eine Symmetrie des rotierenden Elements angepasst wird, beispielsweise gemäß der oben beschriebenen Ausgestaltung. Auf diese Weise kann durch die Anordnung und durch die Anzahl der Magnetsensoren die oben genannte Phasenbedingung erreicht werden. Sind beispielsweise sechs Verdichterschaufeln vorgesehen, so können beispielsweise sechs Magnetsensoren vorgesehen sein, welche, betrachtet von einer Rotationsachse des rotierenden Elements, einen Winkelabstand von 60° aufweisen und/oder entlang einer Umfangsbahn jeweils einen Abstand von einem Sechstel des Umfangs zum benachbarten Magnetsensor aufweisen.

Sind mehrere Magnetsensoren vorgesehen, so können diese insbesondere elektrisch miteinander verschaltet, also über eine elektrische Schaltung miteinander verbunden sein. Diese elektrische Schaltung kann insbesondere derart ausgestaltet sein, dass Signale mehrerer und vorzugsweise aller Magnetsensoren in ein und dasselbe Signal einfließen. Insbesondere kann die elektrische Verschaltung ausgewählt sein aus der Gruppe bestehend aus einer Parallelschaltung und einer Reihenschaltung. So können beispielsweise mehrere und vorzugsweise alle der Magnetsensoren, insbesondere der Spulen, parallel oder in Reihe geschaltet sein.

Die vorgeschlagene Sensorvorrichtung in einer oder mehreren der oben beschriebenen Ausgestaltungen weist gegenüber bekannten Sensorvorrichtungen der genannten Art zahlreiche Vorteile auf. So kann insbesondere eine kostengünstige und dennoch zuverlässige Sensorvorrichtung realisiert werden, welche insbesondere auf Basis einer Spule als Magnetsensor ausgestaltet sein kann. Diese Spule kann unmittelbar in ein Kunststoffmaterial des Gehäuses eingespritzt sein. Die Notwendigkeit von Sacklochbohrungen auf einer dem rotierenden Element abgewandten Seite des Gehäuses entfällt somit. Weiterhin lassen sich durch die Verwendung von Spulen, insbesondere Flachspulen, als Magnetfeldsensoren hohe Signalhübe realisieren. Spulen weisen insbesondere eine hohe Temperaturstabilität auf, im Gegensatz beispielsweise zu Halbleiterbauelementen. Durch die Möglichkeit der Realisierung einer hohen Sensorfläche der Spule lassen sich weiterhin hohe Signalhübe realisieren, so dass die Notwendigkeit einer Verstärkung entfällt und/oder dass die Anforderungen an eine derartige Verstärkung sinken. Insbesondere kann auf die Verwendung von Halbleiter-Verstärkerelementen in der Sensorvorrichtung selbst vorzugsweise verzichtet werden. Weiterhin lassen sich durch die hohen Sensorflächen und dadurch, dass die Sensorflächen an die Kontur der Innenoberfläche des Gehäuses und an die Kontur des rotierenden Elements angepasst sind hohe Signalhübe mit geringem Signal-zu-Rausch-Verhältnis erzielen, und die Sensorvorrichtung weist allgemein eine verbesserte Störungsunempfindlichkeit auf. Die Spule kann insbesondere eine an die Kontur eines Verdichtergehäuses angepasste Flachspule mit möglichst großer Fläche sein. Beispielsweise können allgemein Spulen mit einer Sensorfläche von mindestens 5 mm², insbesondere mindestens 1 cm² und besonders bevorzugt mindestens 2 cm² Sensorfläche verwendet werden. Insbesondere können Flachspulen mit möglichst großer Fläche eingesetzt werden, welche vorzugsweise an eine Kontur des Gehäuses, insbesondere eine Innenkontur, vorzugsweise eine Kontur des Verdichtergehäuses, angepasst sein können.

Die oben beschriebene Ausgestaltung mit mehreren Magnetsensoren und insbesondere mit mehreren Magnetfelderzeugern ist besonders vorteilhaft, wenn das Gehäuse, beispielsweise das Verdichtergehäuse, ganz oder teilweise aus einem Kunststoffmaterial besteht, insbesondere einem hochtemperaturfesten Kunststoff. Beispielsweise kann dies durch ein Umspritzen der Magnetsensoren und vorzugsweise auch der Magnetfelderzeuger erfolgen. Der Kunststoff kann dabei das eigentliche Sensorgehäuse bilden. Allgemein kann so ein Aufbau mit vernachlässigbaren Toleranzen zwischen der eigentlichen Sensorvorrichtung und dem Verdichterrad realisiert werden. Weiterhin lassen sich Kosten reduzieren und die Zuverlässigkeit der Sensorvorrichtung erhöhen.

### Kurze Beschreibung der Zeichnungen

Weitere Einzelheiten und Merkmale bevorzugter Ausgestaltungen der Erfindung ergeben sich aus der nachfolgenden Beschreibung von Ausführungsbeispielen.

Es zeigen:
- Figur 1: ein erstes Ausführungsbeispiel einer erfindungsgemäßen Sensorvorrichtung;
- Figur 2: ein zweites Ausführungsbeispiel einer erfindungsgemäßen Sensorvorrichtung;
- Figur 3: eine Draufsicht auf eine Sensorfläche eines Magnetsensors der Sensorvorrichtung gemäß Figur 2;
- Figur 4: ein zu Figur 3 alternatives Ausführungsbeispiel einer Sensorvorrichtung mit einer Mehrzahl von Magnetsensoren; und
- Figuren 5A und 5B: verschiedene Möglichkeiten der elektrischen Verschaltung der Magnetsensoren in Figur 4.

Ausführungsformen der Erfindung

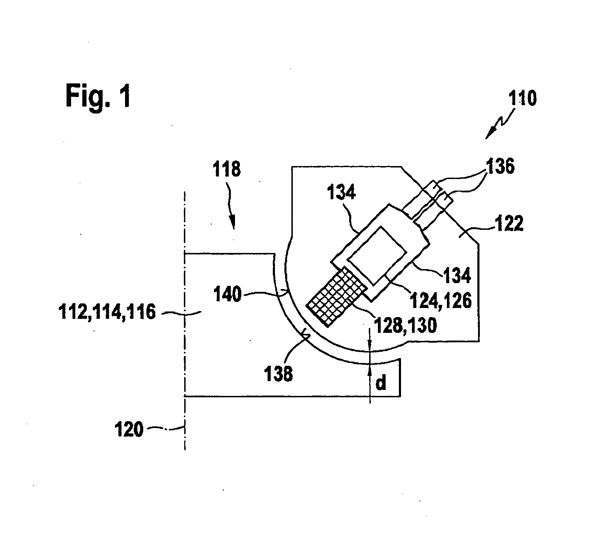

In Figur 1 ist ein erstes Ausführungsbeispiel einer erfindungsgemäßen Sensorvorrichtung 110 zur Erfassung mindestens einer Rotationseigenschaft eines rotierenden Elements 112 dargestellt. Das rotierende Element 112 ist in diesem Ausführungsbeispiel ein Verdichterrad 114 eines Verdichters 118 eines Abgasturboladers, welches um eine Achse 120 rotiert. Auch andere Anwendungen und Einsatzgebiete sind jedoch grundsätzlich möglich.

Die Sensorvorrichtung 110 umfasst ein Gehäuse 122 des Verdichters, also in diesem Ausführungsbeispiel ein Verdichtergehäuse. Das Verdichtergehäuse ist vorzugsweise aus einem Gehäusematerial in Form mindestens eines Kunststoffs gefertigt.

Die Sensorvorrichtung 110 umfasst mindestens einen Magnetfelderzeuger 124, welcher vorzugsweise in Form eines Permanentmagneten 126 ausgestaltet ist. Der Magnetfelderzeuger 124 ist ausgestaltet, um am Ort des rotierenden Elements 112 ein Magnetfeld, vorzugsweise ein statisches Magnetfeld, zu erzeugen, welches in dem rotierenden Element 112 Wirbelströme induziert.

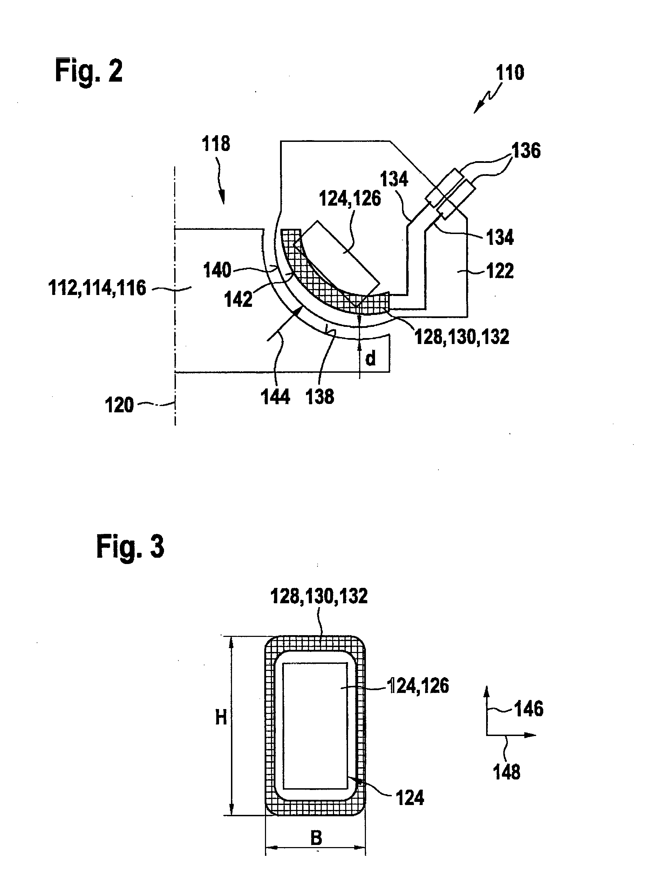

Weiterhin umfasst die Sensorvorrichtung 110 mindestens einen Magnetsensor 128. In den dargestellten Ausführungsbeispielen kann dieser Magnetsensor 128 insbesondere als Spule 130 ausgestaltet sein, insbesondere, wie in Figur 2 dargestellt, als Flachspule 132. Eine elektrische Verbindung, insbesondere Zuleitungen 134 und/oder Verbindungselemente, insbesondere Steckkontakte 136, können, ebenso wie der Magnetsensor 128 und vorzugsweise auch der Magnetfelderzeuger 124, in dem Gehäusematerial des Gehäuses 122, vorzugsweise in dem Kunststoff, eingebettet sein.

In Figur 1 ist ein erstes Ausführungsbeispiel der Sensorvorrichtung 110 gezeigt. Bei dieser Ausgestaltung können insbesondere bei der Herstellung des Verdichtergehäuses 122 die Einzelteile der Sensorvorrichtung 110 ganz oder teilweise mit Kunststoff umspritzt werden, insbesondere die Spule 130, der Permanentmagnet 126, die Zuleitungen 134 und die Steckkontakte 136. Dieses Einbetten in das Gehäusematerial, beispielsweise durch Umspritzen und/oder eine andere Art der Umhüllung, beispielsweise ein Gießverfahren, kann insbesondere in einem Arbeitsschritt mit der Formung des Gehäuses 122 erfolgen. Der Kunststoff kann dann das eigentliche Gehäuse 122, welches auch als Sensorgehäuse der Sensorvorrichtung 110 fungieren kann, bilden. Im Gegensatz beispielsweise zur DE 10 2007 005 769 A1 werden bei dieser Ausgestaltung jedoch nicht nur der eine oder die mehreren Permanentmagneten 126 umspritzt, sondern auch die Spule 130. Vorteile dieser Einbettung des Magnetsensors 128 in das Gehäuse 122 sind insbesondere vernachlässigbare Toleranzen zwischen dem Magnetsensor 128 und dem Verdichterrad 114, reduzierte Kosten und eine erhöhte Zuverlässigkeit. Anstelle oder zusätzlich zu einer Spule 130 als Magnetsensor 128 können grundsätzlich auch andere Arten von Magnetsensoren verwendet werden, beispielsweise ein oder mehrere aktive magnetfeldempfindliche Sensorelemente, beispielsweise ein oder mehrere Sensorelemente, welche auf der Verwendung eines Hall- oder GMR-Effekts basieren.

Wie in Figur 1 dargestellt, sind die Oberflächen des rotierenden Elements 112 gekrümmt ausgestaltet. So weisen insbesondere, wie bei üblichen Verdichtern 118 üblich, Verdichterschaufeln 116 eine gekrümmte Oberfläche 138 auf. Dementsprechend weist auch eine Gehäuseoberfläche 140, welche dem rotierenden Element 112 zugewandt ist, eine Kontur auf und ist gekrümmt ausgestaltet dergestalt, dass die Kontur der Gehäuseoberfläche 140 der Krümmung der Oberfläche 138 angepasst ist. Dementsprechend kann insbesondere ein Abstand zwischen den Oberflächen 138, 140, welcher in Figur 1 mit d bezeichnet ist, zumindest weitgehend konstant ausgestaltet werden.

In einer zweiten, in Figur 2 dargestellten möglichen Ausgestaltung der Sensorvorrichtung 110 entspricht die Sensorvorrichtung 110 zunächst im Wesentlichen der Ausgestaltung gemäß Figur 1. Zusätzlich wird hier jedoch eine weitere Erhöhung der induzierten Spannung im Vergleich zur Sensorvorrichtung 110 gemäß Figur 1 erreicht. Hierzu ist der Magnetsensor 128, insbesondere die Spule 130, und vorzugsweise auch der Magnetfelderzeuger 124, insbesondere der Permanentmagnet 130, an die Kontur der Gehäuseoberfläche 140 angepasst. Beispielsweise folgt die Spule 130 der Kontur des Gehäuses 122, insbesondere der Kontur der Gehäuseoberfläche 124, und somit auch der Form der Verdichterschaufeln 116. Dementsprechend weist der Magnetsensor 128 beispielsweise eine gekrümmte Sensoroberfläche 142 auf. Diese Sensoroberfläche 142 folgt im Wesentlichen dem Verlauf der Gehäuseoberfläche 140 oder ist an diesen angepasst. Insbesondere durch die großflächige Ausgestaltung der Spule 130, vorzugsweise der Flachspule 132, vergrößert sich die Querschnittsfläche der Spule 130 und insbesondere die Sensoroberfläche 142 gegenüber der Anordnung gemäß Figur 1. Zusätzlich kann ein Abstand zwischen dem Magnetsensor 128, insbesondere der Spule 130, und den Verdichterschaufeln 116 weiter reduziert werden. Der Magnetfelderzeuger 124 kann dabei zumindest teilweise von der Spule 130 umschlossen sein.

In Figur 3 ist eine mögliche Ausgestaltung der Spule 130 des Magnetsensors 128 gezeigt, die beispielsweise in der Sensorvorrichtung 110 gemäß Figur 2, jedoch grundsätzlich auch in anderen Sensorvorrichtungen 110, eingesetzt werden kann. Dargestellt ist eine Draufsicht auf die Spule 130 mit einer Blickrichtung senkrecht zur Sensoroberfläche 124, beispielsweise in einer in Figur 2 mit der Bezugsziffer 144 bezeichneten Blickrichtung. Insbesondere kann diese Blickrichtung 144 im Wesentlichen mittig in der Sensoroberfläche 142 angeordnet sein. Ist die Spule 130 eben ausgestaltet, so kann die Zeichenebene in Figur 3 beispielsweise eine Wickelebene der Spule 130 sein. Ist die Spule 130 hingegen gekrümmt ausgestaltet, wie beispielsweise in Figur 2, so kann die Zeichenebene in Figur 3 beispielsweise in Figur 2 gekrümmt angeordnet sein. Dementsprechend ist symbolisch in Figur 3 eine axiale Richtung mit der Bezugsziffer 146 bezeichnet, und eine Richtung senkrecht zu dieser axialen Richtung mit der Bezugsziffer 148, welche auch als tangentiale Richtung bezeichnet werden kann, beides bezogen beispielsweise auf die Achse 120 des rotierenden Elements 112.

Wie aus der Darstellung gemäß Figur 3 hervorgeht, kann die Spule 130 insbesondere in axialer Richtung 146 eine Ausdehnung H aufweisen, welche eine Ausdehnung B in tangentialer Richtung überschreitet. Beispielsweise kann die Ausdehnung in axialer Richtung die Ausdehnung in tangentialer Richtung um mindestens einen Faktor 1,5, vorzugsweise um mindestens einen Faktor 2, überschreiten. Die höhere Ausdehnung in axialer Richtung 146 kann insbesondere der Tatsache Rechnung tragen, dass eine möglichst große Sensoroberfläche 142 geschaffen werden soll, bei gleichzeitig hoher Winkelauflösung. Auch andere Ausgestaltungen sind jedoch grundsätzlich möglich.

In dem in Figur 3 dargestellten Ausführungsbeispiel oder auch in anderen Ausführungsbeispielen kann die Spule 130, beispielsweise die Flachspule 132, insbesondere einen rechteckigen Verlauf aufweisen, beispielsweise mit abgerundeten Kanten. Auch andere Ausgestaltungen sind jedoch grundsätzlich möglich, beispielsweise ein ovaler Verlauf oder eine polygonale Ausgestaltung.

Allgemein wird beispielsweise mit der in Figur 3 dargestellten Ausgestaltung der Spule 130 im Vergleich zu einer Anordnung gemäß Figur 1 auch für geringere Drehzahlen eine Signalverarbeitungselektronik entbehrlich, auch wenn eine derartige Signalverarbeitungselektronik gleichwohl vorgesehen sein kann. Eine derartige Signalverarbeitungselektronik kann beispielsweise zwischen der Sensorvorrichtung 110 und einer Motorsteuerung angeordnet sein und/oder kann ganz oder teilweise Bestandteil der Sensorvorrichtung 110 sein. Insbesondere mit der Anordnung gemäß Figur 2 und/oder der Spule 130 gemäß Figur 3 lassen sich auch für geringere Drehzahlen oder bei gleichen Drehzahlen verbesserte Störungsunempfindlichkeiten erreichen.

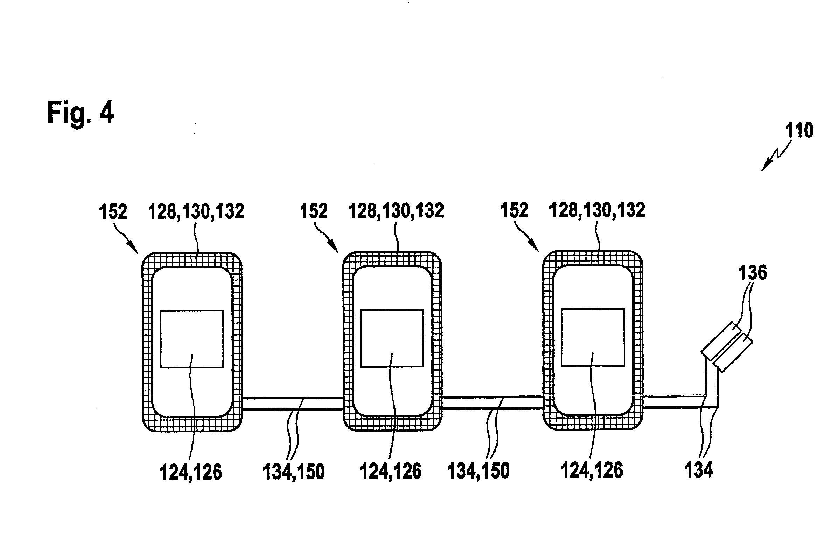

In Figur 4 ist ein zu den Figuren 1 bis 3 alternatives Ausführungsbeispiel einer erfindungsgemäßen Sensorvorrichtung 110 in einer zu Figur 3 analogen Darstellung gezeigt. Die Darstellung zeigt eine Abwicklung der Sensorvorrichtung 110 mit Blickrichtung von der Gehäuseoberfläche 140 in Figur 2. In diesem Ausführungsbeispiel der Sensorvorrichtung 110 sind mehrere Magnetsensoren 128 vorgesehen, welche beispielsweise untereinander durch Verbindungsleitungen 150 verbunden sein können. Jeweils ein Magnetfelderzeuger 124 und ein Magnetsensor 128 bilden dabei jeweils eine Gruppe 152. Exemplarisch ist eine Ausgestaltung gezeigt, bei welcher in jeder Gruppe eine Spule 130 einen Magnetfelderzeuger 124, beispielsweise einen Permanentmagneten 126, umschließt. Auch andere Ausgestaltungen sind jedoch grundsätzlich möglich, beispielsweise analog zu dem Ausführungsbeispiel gemäß Figur 1.

Beispielsweise können, wie in Figur 4 gezeigt, drei Gruppen 152 vorgesehen sein. Auch eine andere Anzahl von Gruppen 152 ist denkbar, beispielsweise eine Anzahl von zwei Gruppen, vier Gruppen, fünf Gruppen, sechs Gruppen oder mehr Gruppen. Beispielsweise können die Gruppen 152 über den Umfang des Gehäuses 122 äquidistant angeordnet sein. Beispielsweise können die Gruppen 152 derart angeordnet sein, dass die üblicherweise sechs bis zwölf Verdichterschaufeln 116 (siehe die Figuren 1 oder 2) bei der Rotation winkelsynchron die Gruppen 152 und/oder die Spulen 130 und die Magnetfelderzeuger 124 passieren. Dies bedeutet beispielsweise bei einem Verdichterrad 114 mit sechs Verdichterschaufeln 116 einen Abstand der Spulenmittelpunkte der Spulen 130 von einem Sechstel des Verdichtergehäuseumfangs oder einem ganzzahligen Vielfachen davon. Dabei entstehen in den Spulen 130 jeweils elektrische Spannungen mit gleicher Phasenlage.

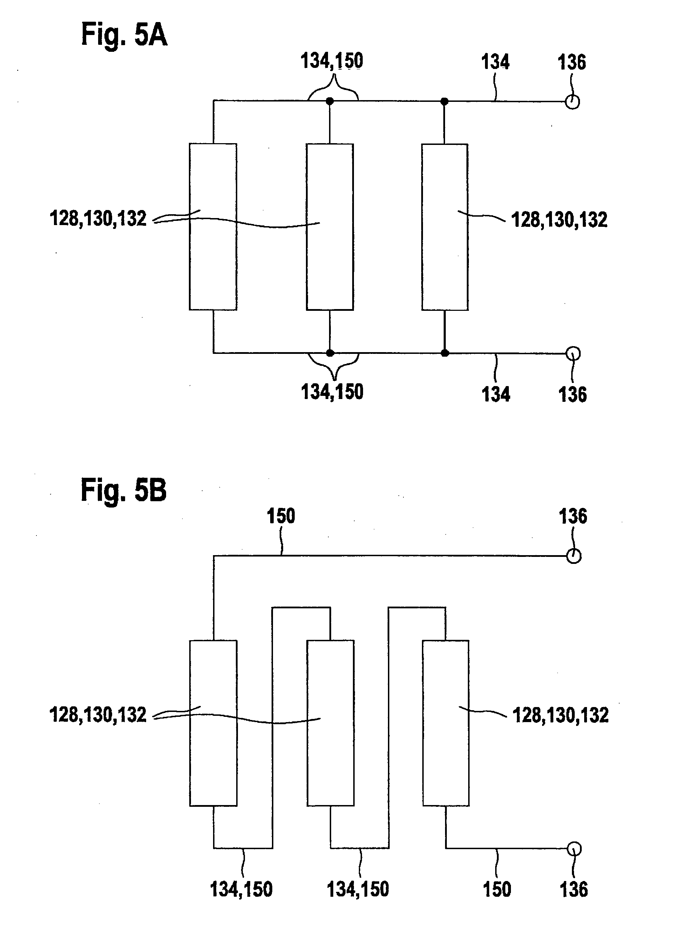

Wie oben ausgeführt, können die Spulen 130 insbesondere durch Verbindungsleitungen 150 miteinander elektrisch verbunden sein. In den Figuren 5A und 5B sind mögliche Verschaltungen der Spulen 130 exemplarisch und stark schematisiert dargestellt. So zeigt Figur 5A eine Parallelschaltung der Magnetsensoren 128, insbesondere der Spulen 130. Figur 5B zeigt exemplarisch eine Reihenschaltung der Magnetsensoren 128, insbesondere der Spulen 130. Beispielsweise können sich bei der Ausgestaltung in Figur 5A die phasengleichen induzierten Ströme addieren, wohingegen sich bei der Ausgestaltung gemäß Figur 5B beispielsweise die induzierten Spannungen addieren können. Auch andere Ausgestaltungen sind jedoch grundsätzlich möglich, beispielsweise Kombinationen aus Reihen- und Parallelschaltungen. Die elektrische Auslegung der Spulen 130 und ihre Verschaltung können insbesondere durch die Auswertung des Signals an den Steckkontakten 136 oder allgemein den Kontakten bestimmt sein und sind grundsätzlich dem Fachmann bekannt.

Die Anordnungen gemäß den Figuren 5A können, insbesondere lediglich mit passiven, temperaturresistenten Bauteilen, ein erhöhtes Sensorsignal gegenüber einer Ausgestaltung mit einer einzigen Spule 130 und einem einzigen Permanentmagneten 126 erzeugen. Damit kann eine Signalverstärkung insbesondere in der Nähe eines Turboladers vermieden werden.

## Patentansprüche

1. Sensorvorrichtung (110) zur Erfassung mindestens einer Rotationseigenschaft eines rotierenden Elements (112), insbesondere zur Erfassung einer Drehzahl eines Verdichters (118) eines Abgasturboladers, wobei die Sensorvorrichtung (110) mindestens ein Gehäuse (122) umfasst, wobei das rotierende Element (112) zumindest teilweise von dem Gehäuse (122) umschlossen ist, wobei das Gehäuse (122) mindestens ein Gehäusematerial aufweist, wobei die Sensorvorrichtung (110) weiterhin mindestens einen Magnetfelderzeuger (124) zur Erzeugung eines magnetischen Feldes am Ort des rotierenden Elements (112) und mindestens einen Magnetsensor (128) zur Erfassung eines durch Wirbelströme des rotierenden Elements (112) erzeugten Magnetfelds umfasst, **dadurch gekennzeichnet, dass**
eine dem rotierenden Element (112) zuweisende Oberfläche (140) des Gehäuses (122) einen einer Krümmung des rotierenden Elements (112) angepassten gekrümmten Verlauf aufweist und dass der Magnetsensor (128) zumindest teilweise in dem Gehäusematerial eingebettet ist und eine dem rotierenden Element (112) zuweisende Sensoroberfläche (142) des Magnetsensors (128) einen der Oberfläche (140) des Gehäuses (122) angepassten gekrümmten Verlauf aufweist,

2. Sensorvorrichtung (110) nach dem vorhergehenden Anspruch, wobei das Gehäusematerial mindestens ein Kunststoffmaterial aufweist, wobei der Magnetsensor (128) von dem Kunststoffmaterial umschlossen ist, vorzugsweise allseitig, vorzugsweise durch Umspritzen und/oder Vergießen.

3. Sensorvorrichtung (110) nach einem der vorhergehenden Ansprüche, wobei der Magnetsensor (128) mindestens eine Spule (130) umfasst.

4. Sensorvorrichtung (110) nach einem der vorhergehenden Ansprüche, wobei das rotierende Element (112) um eine Achse (120) drehbar gelagert ist, wobei die dem rotierenden Element (112) zuweisende Sensoroberfläche des Magnetsensors (128)
in einer tangentialen Richtung (148) zur Achse (120) eine geringere Ausdehnung aufweist als in einer axialen Richtung (146).

5. Sensorvorrichtung (110) nach einem der vorhergehenden Ansprüche, wobei der Magnetfelderzeuger (124) zumindest teilweise von dem Magnetsensor (128) umschlossen ist.

6. Sensorvorrichtung (110) nach einem der vorhergehenden Ansprüche, wobei die Sensorvorrichtung (110) mindestens zwei Magnetsensoren (128) aufweist, vorzugsweise mindestens drei und besonders bevorzugt mindestens vier.

7. Sensorvorrichtung (110) nach dem vorhergehenden Anspruch, wobei die Magnetsensoren (128) äquidistant angeordnet sind.

8. Sensorvorrichtung (110) nach einem der vier vorhergehenden Ansprüche, wobei Magnetsensoren (128) elektrisch miteinander verschaltet sind, wobei die elektrische Verschaltung ausgewählt ist aus der Gruppe bestehend aus einer Parallelschaltung und einer Reihenschaltung.

## Claims

1. Sensor apparatus (110) for detecting at least one rotation property of a rotating element (112), in particular for detecting: a rotation speed of a compressor (118) of an exhaust-gas turbocharger, wherein the sensor apparatus (110) comprises at least one housing (122), wherein the rotating element (112) is at least partially surrounded by the housing (122), wherein the housing (122) has at least one housing material, wherein the sensor apparatus (110) further comprises at least one magnetic field generator (124) for generating a magnetic field at the location of the rotating element (l12) and at least one magnet sensor (128) for detecting a magnetic field which is generated by eddy currents of the rotating element (112), **characterized in that** a surface (140) of the housing (122), which surface faces the rotating element (112), has a curved profile which matches a curvature of the rotating element (112), and **in that** the magnet sensor (128) is at least partially embedded in the housing material, and a sensor surface (142) of the magnet sensor (128), which sensor surface faces the rotating element (112), has a curved profile which matches the surface (140) of the housing (122).

2. Sensor apparatus (110) according to the preceding claim, wherein the housing material has at least one plastic material, wherein the magnet sensor (128) is surrounded by the plastic material, preferably on all sides, preferably by extrusion coating and/or potting.

3. Sensor apparatus (110) according to one of the preceding claims, wherein the magnet sensor (128) comprises at least one coil (130).

4. Sensor apparatus (110) according to one of the preceding claims, wherein the rotating element (112) is mounted such that it can rotate about an axis (120), wherein the sensor surface of the magnet sensor (128), which sensor surface faces the rotating element (112), has a smaller extent in a tangential direction (148) to the axis (120) than in an axial direction (146).

5. Sensor apparatus (110) according to one of the preceding claims, wherein the magnetic field generator (124) is at least partially surrounded by the magnet sensor (128).

6. Sensor apparatus (110) according to one of the preceding claims, wherein the sensors apparatus (110) has at least two magnet sensors (128), preferably at least three, and particularly preferably at least four.

7. Sensor apparatus (110) according to the preceding claim, wherein the magnet sensors (128) are arranged at equal distances.

8. Sensor apparatus (110) according to one of the four preceding claims, wherein the magnet sensors (128) are electrically interconnected, wherein the electrical interconnection is selected from the group comprising a parallel circuit and a series circuit.

## Revendications

1. Dispositif de détection (110) pour la détection d'au moins une caractéristique de rotation d'un élément rotatif (112), notamment pour la détection d'une vitesse de rotation d'un compresseur (118) d'un turbocompresseur de gaz d'échappement, le dispositif de détection (110) comprenant au moins un carter (122), l'élément rotatif (112) étant entouré au moins en partie par le carter (122), le carter (122) comportant au moins un matériau de carter, le dispositif de détection (110) comprenant en outre au moins un système de production de champ magnétique (124) pour produire un champ magnétique à l'endroit de l'élément rotatif (112) et au moins un capteur magnétique (128) pour la détection d'un champ magnétique produit par des courants de Foucault de l'élément rotatif (112), **caractérisé en ce qu'**une surface (140) du carter (122) orientée vers l'élément rotatif (112) présente un tracé incurvé adapté à une courbure de l'élément rotatif (112) et que le capteur magnétique (128) est au moins en partie encastré dans le matériau de carter et qu'une surface de capteur (142) du capteur magnétique (128) orientée vers l'élément rotatif (112) comporte un tracé incurvé adapté à la surface (140) du carter (122).

2. Dispositif de détection (110) selon la revendication précédente, le matériau de carter comportant au moins une matière plastique, le capteur magnétique (128) étant entouré de matière plastique, de préférence de tous les côtés, de préférence par injection et/ou coulage.

3. Dispositif de détection (110) selon l'une quelconque des revendications précédentes, le capteur magnétique (128) comprenant au moins une bobine (130).

4. Dispositif de détection (110) selon l'une quelconque des revendications précédente, l'élément rotatif (112) étant disposé de façon à pouvoir pivoter autour d'un axe (120), la surface de capteur du capteur magnétique (128) orientée vers l'élément rotatif (112) présentant une extension davantage réduite dans une direction tangentielle (148), par rapport à l'axe (120), que dans une direction axiale (146).

5. Dispositif de détection (110) selon l'une quelconque des revendications précédentes, le système de production de champ magnétique (124) étant au moins en partie entouré par le capteur magnétique (128).

6. Dispositif de détection (110) selon l'une quelconque des revendications précédentes, le dispositif de détection (110) comportant au moins deux capteurs magnétiques (128), de préférence au moins trois et de façon particulièrement préférée au moins quatre.

7. Dispositif de détection (110) selon la revendication précédente, les capteurs magnétiques (128) étant disposés à équidistance.

8. Dispositif de détection (110) selon l'une quelconque des quatre revendications précédentes, les capteurs magnétiques (128) étant reliés les uns aux autres sur le plan électrique, le circuit électrique étant sélectionné dans le groupe composé d'un circuit parallèle et d'un circuit en série.
